Europäisches Patentamt

European Patent Office

Office européen des brevets

(19)

(11) Numéro de publication: **0 169 774**
**B1**

(12) ## FASCICULE DE BREVET EUROPEEN

(45) Date de publication du fascicule du brevet:
**28.12.88**

(21) Numéro de dépôt: **85401431.3**

(22) Date de dépôt: **12.07.85**

(51) Int. Cl.⁴: **B 03 C 1/02** // G21C19/30

(54) **Filtre électromagnétique à fonctionnement continu.**

(30) Priorité: **17.07.84 FR 8411311**

(43) Date de publication de la demande:
**29.01.86 Bulletin 86/5**

(45) Mention de la délivrance du brevet:
**28.12.88 Bulletin 88/52**

(84) Etats contractants désignés:
**BE DE GB**

(56) Documents cités:
**WO-A-80/02280**
**FR-A- 2 317 013**
**FR-A- 2 467 020**
**US-A- 2 056 426**
**US-A- 4 102 780**

**SOVIET INVENTIONS ILLUSTRATED, semaine B32, 21 septembre 1979, no. 59392B/32, Derwent Publications LTD., Londres, GB**
**PATENTS ABSTRACTS OF JAPAN, vol. 7, no. 205 (C-185)[1350], 9 septembre 1983**

(73) Titulaire: **COMMISSARIAT A L'ENERGIE ATOMIQUE, 31/33, rue de la Fédération, F-75015 Paris (FR)**

(72) Inventeur: **Dolle, Lucien, 2 Domaine Butte à la Reine, F-91120 Palaiseau (FR)**

(74) Mandataire: **Mongrédien, André et al, c/o BREVATOME 25, rue de Ponthieu, F-75008 Paris (FR)**

## Description

La présente invention a pour objet un filtre électromagnétique, suivant le préambule de la revendication 1, fonctionnant sans interruption, qui s'applique particulièrement à la filtration de liquides divers, lesquels peuvent être chimiquement agressifs ou radioactifs. Pour cette raison, ce filtre ne possède pas de vannes de sectionnement et permet le soutirage continu ou programmé des boues; cependant il peut aussi être pourvu d'un système de vannes de sectionnement et d'eau de rinçage si ce système s'avère avantageux ou indispensable en raison des particularités du mode d'exploitation du filtre.

On sait qu'un filtre électromagnétique dans sa forme habituelle est essentiellement constitué d'une enveloppe en matériau non magnétique, généralement remplie d'un garnissage magnétisable et placée à l'intérieur d'un enroulement électrique disposé en une ou plusieurs bobines coaxiales, ou entre les pièces polaires d'électroaimants indépendants. Le passage d'un courant électrique dans le bobinage provoque l'apparition d'un champ magnétique ayant pour effet de magnétiser le garnissage qui est lui-même constitué de telle façon qu'il présente une grande quantité de petites cavités devenant le siège de forts gradients de champ magnétique. Le garnissage peut être fixe et se présente généralement sous forme de bourre, de toile de fils d'acier ou d'empilement de grilles. Mais il est souvent aussi réalisé par un lit de billes d'acier qui peut se fluidiser dans un courant d'eau de rinçage et permettre ainsi une régénération par extraction des boues particulièrement rapide et totale.

L'application d'un champ magnétique au matériau du garnissage en provoque la magnétisation et, corrélativement, l'apparition de forts gradients de champ magnétique dans les espaces entre les arêtes solides, qui permettent de déplacer les particules solides magnétisables que transporte un fluide traversant ce garnissage.

Concrètement, lorsqu'un fluide chargé d'impuretés solides douées d'une susceptibilité magnétique suffisante traverse le garnissage d'un filtre électromagnétique ainsi aimanté, les impuretés en question sont transportées des zones à faible champ magnétique vers les zones à fort champ magnétique, c'est-à-dire vers les pôles magnétiques élémentaires que présente ce garnissage. Par le jeu des forces magnétiques, ces impuretés s'accrochent dans les cavités du garnissage, qui joue ainsi le rôle de filtre. Cet accrochage a lieu préférentiellement aux endroits où règne le plus fort champ magnétique et se trouve naturellement favorisé si de plus, à cet endroit, la vitesse linéaire du fluide est ralentie.

Rigoureusement, une particule aimantée subit, dans un champ magnétique non homogène, une force mesurée par le produit de son aimantation et du gradient de champ. Sauf en cas de saturation, l'aimantation de la particule est proportionnelle au champ magnétique et, en conséquence, la force qu'elle subit dans une cavité du garnissage d'un filtre électromagnétique est proportionnelle au produit du champ appliqué par le gradient de champ créé dans ladite cavité. On comprend aisément que des particules composées d'un matériau ferromagnétique sont facilement retenues dans un filtre électromagnétique, mais que des particules à susceptibilité magnétique modérée le sont avec une efficacité qui dépend fortement de la puissance de l'enroulement électrique du filtre et de l'aptitude du garnissage à créer de forts gradients de champ dans les cavités qu'il comporte.

L'utilisation de tels filtres électromagnétiques a été imaginée pour un grand nombre d'installations contenant un fluide pollué par des impuretés insolubles qui restent en suspension sous forme de particules solides. Par exemple, dans le cas des centrales électronucléaires où ils peuvent prendre place soit dans les circuits primaires, soit dans les circuits secondaires, cet emploi est décrit notamment dans la demande de brevet allemand n° 2 136 352 déposée le 21 juillet 1971 sous le titre «Dampfkraftanlage für Kernkraftwerke mit Siedewasserreaktoren», et dans le compte rendu de la 30ème réunion annuelle (1969) «International Water Conference of the Engineer Society of Western Pennsylvania» (article de H.G. Heitmann, page 69). D'autres applications plus particulièrement relatives à l'élimination d'éléments lourds métalliques en suspension dans un liquide sont décrites dans le brevet français n° 2 466 282.

Dans de tels filtres, on trouve toujours, à l'intérieur d'une enveloppe en matériau non aimantable, un garnissage qui accroche les particules solides jusqu'à épuisement d'une capacité qui est fonction du débit du liquide à filtrer, du champ magnétique appliqué et des gradients de champ réalisés selon les caractéristiques géométriques de ce garnissage. Quand le filtre devient inopérant, il faut régénérer le garnissage par extraction des boues. Cette extraction est généralement pratiquée par un rinçage du garnissage après désaimantation. Pour cette raison, le filtre est pourvu de vannes qui permettent d'arrêter la circulation du liquide à filtrer et de tubulures aussi munies de vannes qui servent à la circulation d'un courant d'eau de rinçage. L'opération de régénération est très rapide: elle ne dure que quelques minutes et peut se faire automatiquement. Néanmoins, elle interrompt le fonctionnement du filtre et comporte une extraction de boues et une remise en service par des manœuvres de vannes. Quand le liquide à filtrer se distingue par une forte agressivité chimique ou donne lieu à des précautions particulières quand il présente des risques de contamination radioactive, les manœuvres de vannes et la dilution des boues dans un courant d'eau de rinçage peuvent, à différents titres, être des inconvénients.

Un filtre de ce type est décrit dans le document de brevet PCT numéro WO-A 80/02280, sur lequel le préambule de la revendication 1 est basé. Ce filtre comprend une tubulure d'entrée et une tubulure de sortie et des canaux de filtrage disposées entre les deux tubulures. Les moyens de filtrage sont constitués d'éléments magnétiques entourant les canaux de filtrage. L'évacuation des particules plaquées contre les parois des canaux de filtrage se fait pendant une interruption du champ magnétique, au cours de laquelle les particules tombent par gravité sur le fond de la tubulure de sortie. Elles sont ensuite extraites par des ouvertures placées sur le fond de la tubulure de sortie. Ce filtre ne fonctionne donc pas en continu.

La présente invention a justement pour objet un filtre capable de fonctionner sans interruption, sans vannes et sans courant d'eau de rinçage, l'extraction des boues étant continue ou se faisant par soutirages séquentiels pendant que le liquide à filtrer continue à circuler. Il peut se présenter sous forme de deux variantes selon qu'il comporte ou non un garnissage. La variante sans garnissage possède un avantage supplémentaire du fait de ses petites dimensions qui réduisent le coût de l'équipement électromagnétique, et elle peut généralement être insérée dans un circuit de procédé sans dispositif de supportage particulier.

Selon la principale caractéristique du filtre électromagnétique objet de l'invention, celui-ci servant essentiellement à extraire des particules solides entraînées par un courant fluide, ce filtre comprenant:
– une tubulure d'entrée (4),
– une tubulure de sortie (6),
– une enveloppe (2) disposée entre les tubulures d'entrée (4) et de sortie (6) et en communication avec les dernières, le filtre étant caractérisé en ce que son fonctionnement est continu, en ce que ladite enveloppe comporte une rigole (20) et en ce que le filtre comprend:
– des moyens pour créer, à l'intérieur de l'enveloppe (2), un premier gradient de champ magnétique dans le sens d'écoulement du fluide, et
– des moyens pour créer, à l'intérieur de l'enveloppe (2), un deuxième gradient de champ magnétique dans une direction perpendiculaire au sens d'écoulement du fluide afin d'entraîner les particules solides vers la rigole.

Selon une autre caractéristique de l'invention, les moyens pour créer un gradient de champ magnétique dans le sens d'écoulement du fluide comprennent au moins un électro-aimant ayant un circuit magnétique comportant au moins deux pièces polaires, chaque pièce polaire présentant une série de dents situées dans un plan parallèle à la direction d'écoulement du fluide et chaque dent étant en contact avec l'enveloppe. De préférence, la largeur des dents est décroissante dans le sens de l'écoulement du fluide. Dans le mode de réalisation préféré, les moyens pour créer un gradient de champ magnétique dans le sens d'écoulement du fluide comprennent une série d'électro-aimants disposés latéralement le long de l'enveloppe et dont la puissance est croissante dans le sens d'écoulement du fluide.

Selon un autre aspect de l'invention, les moyens pour créer, à l'intérieur de l'enveloppe, un gradient de champ magnétique dans une direction perpendiculaire au sens d'écoulement du fluide comprennent au moins un électro-aimant ayant un circuit magnétique comportant au moins deux pièces polaires taillées de façon à s'appliquer sur l'enveloppe au voisinage de la rigole et définissant un entrefer dont la largeur diminue au fur et à mesure qu'on s'approche de la rigole. Dans le mode de réalisation préféré, ces pièces polaires comportent en outre une série de dents situées dans un plan parallèle à la direction d'écoulement du fluide, ce qui permet de réaliser à la fois le premier et le deuxième gradients de champ magnétique.

Ainsi, les particules solides acquièrent en tout point du volume du filtre une aimantation proportionnelle au champ magnétique. Si le filtre est horizontal, elles y subissent une force dirigée verticalement et proportionnelle à l'accélération de la pesanteur et une force magnétique proportionnelle au gradient du champ et dirigée dans le sens des champs croissants. La force résultante provoque une forte déviation de la trajectoire de ces particules par rapport au sens du courant liquide, et généralement dans le sens des champs magnétiques croissants, de telle sorte qu'elle soit dirigée vers le point de soutirage aménagé en conséquence. Si le filtre est en position verticale, la pesanteur exerce un effet de ralentissement sur les particules, de telle sorte que la trajectoire que leur imprime la force magnétique bénéficie de la vitesse linéaire freinée dans le cas d'un courant ascendant. Dans le cas d'un courant descendant, l'action de la pesanteur, bien que comparativement faible, s'ajoute à celle du gradient longitudinal du champ magnétique, et la composante des forces qui déplacent les particules leur imprime une trajectoire plus allongée que dans les deux cas précédents. Bien entendu, l'enveloppe du filtre ayant une forme permettant précisément l'extraction de particules ainsi déviées de leur trajectoire initiale, comme il apparaîtra dans la suite de la description de l'invention, devra être elle-même orientée en conséquence pour rendre possible le soutirage des boues.

Selon une autre caractéristique du filtre électromagnétique objet de l'invention, l'enveloppe présente une section de passage du fluide croissante afin de diminuer la vitesse d'écoulement de ce fluide et de faciliter le dépôt des particules solides au fond de l'enveloppe. On peut encore prévoir une tubulure de soutirage débouchant dans le fond de l'enveloppe, cette tubulure pouvant être équipée d'un clapet pour l'extraction périodique des particules solides. Dans ce cas, le courant électrique dans les bobines du dernier électro-aimant dans le sens d'écoulement du fluide est asservi à la commande du clapet de soutirage. On peut également équiper la tubulure de soutirage d'un dispositif d'aspiration et/ou d'un dispositif de raclage disposé dans le fond de l'enveloppe.

De préférence, le soutirage des boues s'effectue par une tubulure de petit diamètre prévue à cet effet, de façon continue par prélèvement d'une petite fraction du débit de liquide si la concentration des particules solides est initialement importante. Mais, quand la concentration des particules solides dans le liquide est faible, on peut effectuer un soutirage périodique pour réduire avantageusement la fraction de liquide prélevée et obtenir un déchet plus concentré. Ce prélèvement périodique est rendu possible par un simple clapet à commande mécanique ou électromagnétique qui permet d'obturer le conduit de soutirage, comme il apparaîtra dans la suite de cette description.

De préférence encore, le soutirage est pratiqué de telle façon qu'il s'adresse à un amas de boues formé progressivement par le jeu des forces magnétiques dans la partie de l'enveloppe qui se termine par le conduit de soutirage, quand l'état stationnaire magnétique du filtre est établi, et on comprend ainsi que le soutirage puisse avoir lieu sans que le fonctionnement du filtre soit interrompu.

Selon une autre caractéristique du filtre électromagnétique objet de l'invention, celui-ci peut comporter un système de vannes d'isolement et de commande d'eau de rinçage permettant un décolmatage périodique.

Dans un autre mode de réalisation, on supprime les vannes d'isolement et la commande d'eau de rinçage car c'est la fluide à purifier lui-même qui sert de fluide de rinçage.

Généralement, l'enveloppe est réalisée en un matériau non aimantable. De plus, son espace intérieur peut être rempli au moins partiellement d'un garnissage aimantable.

La variante avec garnissage aimantable, qui est utilisée dans les dispositifs de l'art antérieur, permet de réaliser des dispositifs avec des dimensions notablement plus importantes du fait de la continuité du circuit magnétique constitué par les armatures des électro-aimants et le métal du garnissage placé dans les entrefers à l'intérieur de l'enveloppe. Le soutirage continu des boues a lieu quand l'état magnétique stationnaire s'est établi, avec une saturation partielle du garnissage fonction de la vitesse linéaire du liquide et du champ magnétique appliqué. Le soutirage périodique reste bien entendu toujours possible, mais il peut s'avérer utile de l'accélérer par une aspiration sur le conduit de soutirage pour dégager rapidement la partie la plus chargée du garnissage et accélérer ainsi le cheminement des particules solides vers cet endroit sous l'effet de la force d'inertie accrue du fait d'un courant de liquide plus rappide dans cette direction.

L'invention apparaîtra mieux à la lecture de la description qui va suivre, donnée à titre purement illustratif et nullement limitatif, en référence aux dessins annexés, dans lesquels:

– la figure 1 est une vue schématique en coupe d'un mode de réalisation du filtre électromagnétique objet de l'invention,

– la figure 2 est une vue en coupe suivant la ligne II-II de la figure 1,

– la figure 3 est une vue en coupe suivant la ligne III-III de la figure 1, et

– la figure 4 est une vue en coupe suivant la ligne IV–IV de la figure 1.

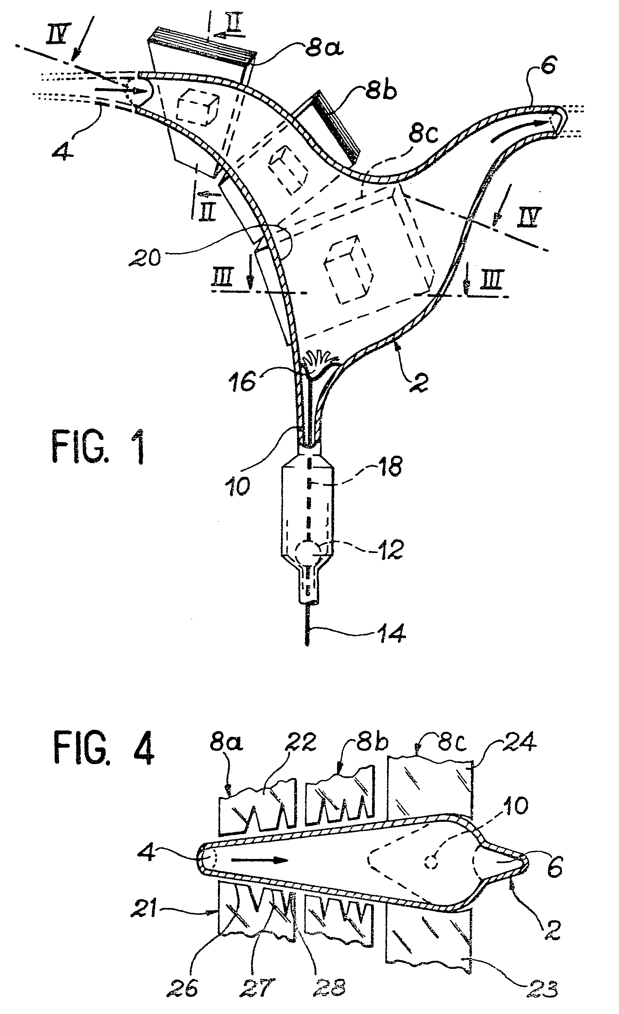

Si l'on se reporte à la figure 1, on voit que le dispositif objet de l'invention comporte essentiellement une enveloppe 2 parcourue par un courant de fluide, généralement un liquide, qui pénètre par une tubulure d'entrée 4 et sort par une tubulure de sortie 6. On voit encore sur la figure que, suivant le mode de réalisation préféré, l'enveloppe 2 a une section de passage du fluide beaucoup plus grande que les tubulures 4 et 6, cette section étant régulièrement croissante à partir de l'endroit où la tubulure 4 débouche dans l'enveloppe 2 afin de ralentir la vitesse du fluide dans l'enveloppe.

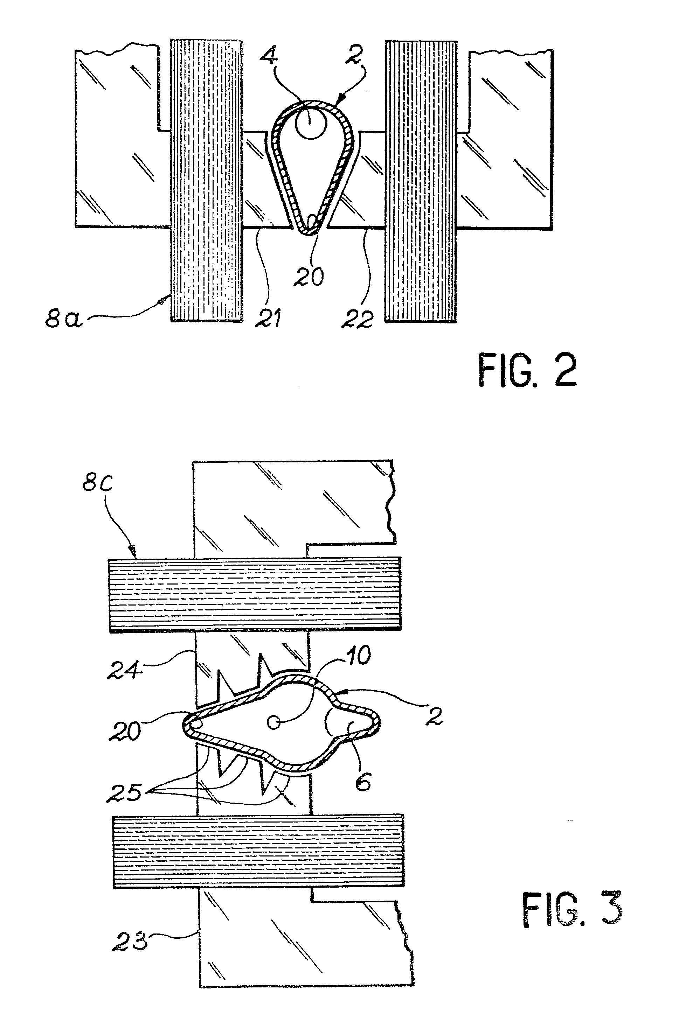

Afin de créer à l'intérieur de l'enveloppe 2 un gradient de champ magnétique, on a disposé latéralement autour de cette dernière une série d'électroaimants, qui sont au nombre de trois dans l'exemple représenté ici et portent les références 8a, 8b et 8c dans le sens d'écoulement du fluide. La disposition particulière de ces électroaimants, ainsi que la constitution de leurs pièces polaires eront décrites plus en détail ci-après en référence aux figures 2 à 4. On voit encore sur la figure 1 une tubulure de soutirage 10 qui débouche dans le fond de l'enveloppe 2 et sert à l'évacuation des boues ou particules solides entraînées vers le fond de cette enveloppe par le gradient de champ magnétique.

Dans le mode de réalisation représenté ici, la tubulure de soutirage 10 est équipée d'un clapet 12 qui peut être manœuvré soit par commande électromagnétique, soit mécaniquement à l'aide d'un poussoir 14. Si le soutirage des boues se fait de manière continue, on utilise de préférence la commande électromagnétique tandis que la commande mecanique par poussoir est utilisée dans le cas où le soutirage des boues est séquentiel. Dans ce dernier cas, il est avantageux de prévoir un dispositif de raclage 16 relié au clapet 12 par une tige rigide 18: ainsi, le dispositif de raclage 16 suit le mouvement du clapet 12 et accélère le soutirage des boues en les remuant.

Enfin, entre la tubulure d'entrée 4 et le fond de l'enveloppe 2, la forme de l'enveloppe 2 définit une rigole 20 qui facilite le cheminement des boues en direction du fond de l'enveloppe et de la tubulure de soutirage 10. Cette rigole 20 est également visible sur les vues en coupe des figures 2 et 3.

La forme de l'enveloppe 2 permet de donner aux pièces polaires des électro-aimants une taille susceptible de provoquer les grandients de champ magnétique désirés. On voit sur la figure 2 que l'électro-aimant 8a comporte deux pièces polaires 21 et 22 dont la forme épouse celle de la section droite de l'enveloppe 2, créant ainsi un entrefer de largeur variable. Le plan de la figure 2 étant perpendiculaire au sens d'écoulement du fluide, c'est la variation de la largeur de l'entrefer qui crée le gradient de champ magnétique dans ce plan.

Dans le sens d'écoulement du fluide, le gradient de champ magnétique est obtenu en taillant les pièces polaires en forme de dents de largeur décroissante dans le sens d'écoulement du fluide. On voit par exemple sur la figure 3 que l'électro-aimant 89c comporte deux pièces polaires 23 et 24 et que la pièce polaire 23 comporte trois dents 25 qui se trouvent au voisinage immédiat de l'enveloppe 2. De préférence, la largeur des dents diminue dans le sens d'écoulement du fluide comme cela est représenté sur la figure 4. On voit sur cette dernière que la pièce polaire 21 de l'électro-aimant 8a présente trois dents 26, 27 et 28. La dent 26, qui se trouve en amont selon le sens d'écoulement du fluide, a une largeur (comptée suivant le sens d'écoulement du fluide) supérieure à la largeur de la dent 27, qui est elle-même supérieure à la largeur de la dent 28. Les pièces polaires des électro-aimants 8b et 8c comportent également des dents.

Le rôle des dents est de créer à la surface des pièces polaires des concentrations de lignes de champ magnétique. Bien entendu, dans le sens des champs croissants qui correspond au sens de l'écoulement du fluide à filtrer, les électro-aimants sont individuellement plus fortement excités par le choix du nombre d'ampère-tours appliqué aux bobinages pour la double raison de l'amélioration du gradient de champ et de l'augmentation des dimensions de l'entrefer du fait de la forme du filtre. La puissance des bobines dans les circuits magnétiques des électro-aimants est naturellement fonction de la taille du filtre, mais, en tout état de cause, réglée de telle façon que le champ magnétique dans l'entrefer corresponde à sa valeur optimale, en ce sens que la saturation du circuit magnétique constitue approximativement une limite supérieure. Bien entendu, des dispositions de pièces polaires autres que celles d'électro-aimants classiques sont applicables sans que la conception du filtre sorte du cadre de l'invention. En particulier, un dispositif magnétique à électro-aimants quadripolaires en est un exemple non limitatif.

Le fonctionnement du filtre est le suivant: les électro-aimants sont excités avec un courant dont la valeur optimale a été déterminée expérimentalement auparavant, et le fluide à filtrer est mis en circulation dans la veine délimitée par l'enveloppe 2 avec un débit optimal également déterminé expérimentalement auparavant. Plus précisément, comme ces deux variables ne sont pas indépendantes, mais elles-mêmes fonction de la charge du filtre et de la susceptibilité magnétique des particules à filtrer, on les choisit au moyen d'une équation de fonctionnement semi-empirique établie par des mesures paramétriques d'efficacité permettant d'ajuster les coefficients numériques de l'équation fondamentale qui exprime le bilan des forces magnétiques et de viscosité agissant sur les particules. Si les particules solides sont paramagnétiques avec des susceptibilités modérées, le champ magnétique dans les entrefers des électro-aimants doit être supérieur à 1 Tesla (1 Tesla = 10 000 Gauss) et la vitesse linéaire du fluide en circulation réduite jusqu'à des valeurs de l'ordre de $1 \, \mathrm{cm.s^{-1}}$ ou même inférieures. La section de passage croissante de la veine liquide est favorable en ce sens que la vitesse linéaire du fluide est ralentie et donc les forces de viscosité sont réduites pendant que la force magnétique qui résulte du champ magnétique croissant et des gradients de champ dirigés dans le même sens accélèrent les particules sur une trajectoire qui les dirige dans la rigole 20. Cette rigole 20 n'a qu'une faible capacité de rétention et, toujours sous l'effet du gradient de champ magnétique, les particules cheminent lentement le long de cette rigole vers le point de soutirage où elles échappent entièrement aux forces de viscosité du fait que le fluide est dirigé dans la tubulure de sortie 10. On peut alors mettre à profit la rétention faible de particules, notamment si elles ont une suceptibilité magnétique modérée comme les composés chimiques paramagnétiques, pour procéder au soutirage continu des boues concentrées en établissant un petit débit de soutirage par la tubulure 10 prévue à cet effet. Le débit de soutirage est naturellement fonction de la concentration des particules transportées par le fluide à filtrer. Quantitativement, ce débit de soutirage peut avantageusement être réglé à une fraction de l'ordre ou inférieure à 1/1000 du débit de fluide dans le filtre, pour réduire la quantité d'effluents rejetés par lui. Mais, de préférence, on peut limiter la quantité d'effluents à une fraction beaucoup plus réduite en procédant à des soutirages séquentiels au moyen du clapet 12 à commande mécanique ou électromagnétique par le poussoir 14. L'action de ce soutirage de courte durée est améliorée par l'effet du mouvement du dispositif de raclage 16. De préférence encore, le courant d'excitation dans le dernier électro-aimant 8c peut être asservi à la commande du clapet 12 pour être réduit pendant la durée du soutirage et améliorer ainsi encore l'action du dispositif de raclage 16.

La fréquence des soutirages est fonction de la concentration des particules transportées par le fluide à filtrer. De cette façon, la quantité d'effluents peut encore être programmée à tout moment en fonction de la concentration des particules dans le fluide à filtrer si elle n'est pas constante.

L'intérêt d'une réduction ainsi optimalisée de la quantité d'effluents apparaît surtout quand il s'agit de filtrer des quantités très importantes de fluide avec de faibles concentrations pondérales de particules solides en suspension, comme le cas se présente souvent, notamment dans le traitement de fluides contaminés par des impuretés solides radioactives.

Naturellement, le fonctionnement du filtre électromagnétique de l'invention qui vient d'être décrit peut aussi comporter l'utilisation d'un adjuvant ferromagnétique de filtration, dont le type est constitué par de la magnétite précipitée ou un matériau équivalent.

**Revendications**

1. Filtre électromagnétique servant à extraire des particules solides entraînées par un courant de fluide comprenant:

– une tubulure d'entrée (4),

– une tubulure de sortie (6),

– une enveloppe (2) disposée entre les tubulures d'entrée (4) et de sortie (6) et en communication avec ces dernières, le filtre étant caractérisé en ce que son fonctionnement est continu, en ce que ladite enveloppe comporte une rigole (20) et en ce qu'il comprend:

– des moyens (26, 27, 28) pour créer, à l'intérieur de l'enveloppe (2), un premier gradient de champ magnétique dans le sens d'écoulement du fluide, et

– des moyens (21, 22) pour créer, à l'intérieur de l'enveloppe (2), un deuxième gradient de champ magnétique dans une direction perpendiculaire au sens d'écoulement du fluide afin d'entraîner les particules solides vers la rigole (20).

2. Filtre électromagnétique selon la revendication 1, caractérisé en ce que les moyens pour créer un gradient de champ magnétique dans le sens d'écoulement du fluide comprennent au moins un électroaimant (8a) ayant un circuit magnétique comportant au moins deux pièces polaires (21, 22), chaque pièce polaire (21) présentant une série de dents (26, 27, 28) situées dans un plan parallèle à la direction d'écoulement du fluide et chaque dent étant en contact avec ladite enveloppe (20).

3. Filtre électromagnétique selon la revendication 2, caractérisé en ce que lesdites pièces polaires (21, 22) définissent un entrefer dont la largeur est croissante dans le sens d'écoulement du fluide.

4. Filtre électromagnétique selon la revendication 3, caractérisé en ce qu'il comporte une série d'électro-aimants (8a, 8b, 8c) dont l'ensemble des pièces polaires définit un entrefer dont la largeur est croissante dans le sens d'écoulement du fluide.

5. Filtre électromagnétique selon l'une quelconque des revendications 2 à 4, caractérisé en ce que la largeur des dents (26, 27, 28) est décroissante dans le sens d'écoulement du fluide.

6. Filtre électromagnétique selon l'une quelconque des revendications 2 à 5, caractérisé en ce que les moyens pour créer un gradient de champ magnétique dans le sens d'écoulement du fluide comprennent une série d'électro-aimants (8a, 8b, 8c) disposés latéralement le long de l'enveloppe (2) et dont la puissance est croissante dans le sens d'écoulement du fluide.

7. Filtre électromagnétique selon l'une quelconque des revendications 1 à 6, caractérisé en ce que les moyens pour créer, à l'intérieur de l'enveloppe (2), un gradient de champ magnétique dans une direction perpendiculaire au sens d'écoulement du fluide comprennent au moins un électro-aimant (8a) ayant un circuit magnétique comportant au moins deux pièces polaires (21, 22) taillées de façon à s'appliquer sur l'enveloppe (2) au voisinage de la rigole (20) et définissant un entrefer dont la largeur diminue au fur et à mesure qu'on s'approche de la rigole (20).

8. Filtre électromagnétique selon la revendication 7, caractérisé en ce que les pièces polaires (21, 22) comportent en outre une série de dents (26, 27, 28) situées dans un plan parallèle à la direction d'écoulement du fluide, réalisant ainsi à la fois le premier et le deuxième gradients de champ magnétique.

9. Filtre électromagnétique selon l'une quelconque des revendications 1 à 8, caractérisé en ce que l'enveloppe (2) présente une section de passage du fluide croissante afin de diminuer la vitesse d'écoulement de ce fluide.

10. Filtre électromagnétique selon l'une quelconque des revendications 1 à 9, caractérisé en ce qu'il comporte en outre une tubulure de soutirage (10) débouchant dans le fond de l'enveloppe (2).

11. Filtre électromagnétique selon l'une quelconque des revendications 9 et 10, caractérisé en ce que la tubulure de soutirage (10) est équipée d'un clapet (12) pour l'extraction périodique des particules solides.

12. Filtre électromagnétique selon les revendications 5 et 11, caractérisé en ce que le courant électrique dans les bobines du dernier électroaimant (8c) dans le sens d'écoulement du fluide est asservi à la commande du clapet de soutirage.

13. Filtre électromagnétique selon l'une quelconque des revendications 10 et 11, caractérisé en ce que la tubulure de soutirage (10) est équipée d'un dispositif d'aspiration.

14. Filtre électromagnétique selon l'une quelconque des revendications 1 à 13, caractérisé en ce qu'il comporte un dispositif de raclage (16) disposé dans le fond de l'enveloppe (2).

15. Filtre électromagnétique selon l'une quelconque des revendications 1 à 14, caractérisé en ce qu'il comporte un système de vannes d'isolement et de commande d'eau de rinçage permettant un décolmatage périodique.

16. Filtre électromagnétique selon l'une quelconque des revendications 1 à 15, caractérisé en ce que ladite enveloppe (2) est réalisée en un matériau non aimantable.

17. Filtre électromagnétique selon l'une quelconque des revendications 1 à 16, caractérisé en ce que l'espace intérieur de l'enveloppe (2) est rempli au moins partiellement d'un garnissage aimantable.

## Claims

1. Electromagnetic filter used for extracting solid particles carried by a fluid current comprising:

– an inlet pipe (4),

– an outlet pipe (6),

– an envelope (2) placed between the inlet (4) and outlet (6) pipes and connected with these pipes, the filter being characterized in that its operation is continuous, in that the said envelope comprises a drain (20) and in that it comprises:

– means (26, 27, 28) of creating, inside the envelope (2), a first magnetic field gradient in the direction of flow of the fluid, and

– means (21, 22) for creating, inside the envelope (2) a second magnetic field gradient in a direction perpendicular to the direction of flow of the fluid in order to drive the solid particles towards the drain (20).

2. Electromagnetic filter according to Claim 1, characterized in that the means of creating a magnetic field gradient in the direction of flow of the fluid comprise at least one electromagnet (8a) having a magnetic circuit comprising at least two pole pieces (21, 22) each pole piece (21) having a series of teeth (26, 27, 28) located in a plane parallel to the direction of flow of the fluid and each tooth being in contact with the said envelope (20).

3. Electromagnetic filter according to Claim 2, characterized in that the said pole pieces (21, 22) define an air gap whose width increases in the direction of flow of the fluid.

4. Electromagnetic filter according to Claim 3, characterized in that it comprises series of electromagnets (8a, 8b, 8c) all of whose pole pieces define an air gap whose width increases in the direction of flow of the fluid.

5. Electromagnetic filter according to any of Claims 2 to 4, characterized in that the width of the teeth (26, 27, 28) decreases in the direction of the flow of the fluid.

6. Electromagnetic filter according to any of Claims 2 to 5, characterized in that the means of creating a magnetic field gradient in the direction of flow of the fluid comprise a series of electromagnets (8a, 8b, 8c) disposed laterally along the envelope (2) and whose power increases in the direction of flow of the fluid.

7. Electromagnetic filter according to any of Claims 1 to 6, characterized in that the means of creating, inside the envelope (2), a magnetic field gradient in a direction perpendicular to the direction of flow of the fluid comprise at least one electromagnet (8a) having a magnetic circuit comprising at least two pole pieces (21, 22) which are cut such that they are applied to the envelope (2) in the vicinity of the drain (20) and which define an air gap whose width diminishes progressively as the drain (20) is approached.

8. Electromagnetic filter according to Claim 7, characterized in that the pole pieces (21, 22) furthermore comprise a series of teeth (26, 27, 28) located in a plane parallel to the direction of flow of the fluid, thus forming both the first and the second magnetic field gradients.

9. Electromagnetic filter according to any of Claims 1 to 8, characterized in that the envelope (2) has an increasing cross-section through which the fluid flows in order to reduce the flow speed of this fluid.

10. Electromagnetic filter according to any of Claims 1 to 9, characterized in that it furthermore comprises a tapping pipe (10) opening into the bottom of the envelope (2).

11. Electromagnetic filter according to either of Claims 9 and 10, characterized in that the tapping pipe (10) is fitted with a valve (12) for the periodic extraction of the solid particles.

12. Electromagnetic filter according to Claims 5 and 11, characterized in that the electrical current in the windings of the last electromagnet (8c) in the direction of flow of the fluid is slaved to the control of the tapping valve.

13. Electromagnetic filter according to either of Claims 10 and 11, characterized in that the tapping pipe (10) is fitted with an aspiration device.

14. Electromagnetic filter according to any of Claims 1 to 13, characterized in that it comprises a scraping device (16) disposed in the bottom of the envelope (2).

15. Electromagnetic filter according to any of Claims 1 to 14, characterized in that it comprises a system of rinsing water isolating and control valves enabling periodic unclogging.

16,. Electromagnetic filter according to any of Claims 1 to 15, characterized in that the said envelope (2) is made from a material which cannot be magnetized.

17. Electromagnetic filter according to any of Claims 1 to 16, characterized in that the space inside the envelope (2) is filled at least partially with a packing which can be magnetized.

**Patentansprüche**

1. Elektromagnetischer Filter zum Abscheiden von in einem Fluidstrom mitgeführten Feststoffteilchen, mit einer Eintrittsleitung (4), einer Austrittsleitung (6) und einem zwischen der Eintrittsleitung (4) und der Austrittsleitung (6) angeordneten und mit diesen strömungsverbundenen Gehäuse (2), dadurch gekennzeichnet, dass die Arbeitsweise des Filters kontinuierlich ist, dass das Gehäuse eine Abzugsrinne (20) aufweist, und dass der Filter Einrichtungen (26, 27, 28) zum Erzeugen eines in Strömungsrichtung des Fluids veränderlichen ersten Magnetfelds im Inneren des Gehäuses (2) und Einrichtungen (21, 22) zum Erzeugen eines in einer zur Strömungsrichtung des Fluids senkrechten Richtung veränderlichen zweiten Magnetfelds für die Mitnahme der Feststoffteilchen zur Abzugsrinne (20) im Inneren des Gehäuses (2) aufweist.

2. Elektromagnetischer Filter nach Anspruch 1, dadurch gekennzeichnet, dass die Einrichtungen zum Erzeugen eines in der Strömungsrichtung des Fluids veränderlichen Magnetfelds wenigstens einen Elektromagnet (8a) aufweisen, dessen Magnetkreis wenigstens zwei Polstücke (21, 22) umfasst, wobei jedes Polstück (21) eine Reihe von Zähnen (26, 27, 28) hat, welche in einer zur Strömungsrichtung des Fluids parallelen Ebene angeordnet sind, so dass sich jeder Zahn in Berührung mit dem Gehäuse (20) befindet.

3. Elektromagnetischer Filter nach Anspruch 2, dadurch gekennzeichnet, dass die Polstücke (21, 22) einen Magnetspalt bilden, dessen Breite in Strömungsrichtung des Fluids zunimmt.

4. Elektromagnetischer Filter nach Anspruch 3, dadurch gekennzeichnet, dass er eine Reihe von Elektromagneten (8a, 8b, 8c) aufweist, einen Magnetspalt von in Strömungsrichtung des Fluids zunehmender Breite bilden.

5. Elektromagnetischer Filter nach einem der Ansprüche 2 bis 4, dadurch gekennzeichnet, dass sich die Breite der Zähne (26, 27, 28) in der Strömungsrichtung des Fluids verringert.

6. Elektromagnetischer Filter nach einem der Ansprüche 2 bis 5, dadurch gekennzeichnet, dass die Einrichtungen zum Erzeugen eines in Strömungsrichtung des Fluids veränderlichen Magnetfelds eine Reihe von seitlich entlang dem Gehäuse (2) angeordneten Elektromagneten (8a, 8b, 8c) aufweisen, deren Stärke in der Strömungsrichtung des Fluids zunimmt.

7. Elektromagnetischer Filter nach einem der Ansprüche 1 bis 6, dadurch gekennzeichnet, dass die Einrichtungen zum Erzeugen eines in einer zur Strömungsrichtung des Fluids lotrechten Richtung veränderlichen Magnetfelds im Inneren des Gehäuses (2) wenigstens einen Elektromagnet (8a) aufweisen, dessen Magnetkreis wenigstens zwei Polstücke (21, 22) umfasst, welche eine der Gestalt des Gehäuses (2) im Bereich der Abzugsrinne (20) angepasste Form haben und einen Magnetspalt bilden, dessen Breite sich mit der Annäherung an die Abzugsrinne (20) verringert.

8. Elektromagnetischer Filter nach Anspruch 7, dadurch gekennzeichnet, dass die Polstücke (21, 22) ausserdem eine Reihe von Zähnen (26, 27, 28) aufweisen, welche in einer zur Strömungsrichtung des Fluids parallelen Ebene angeordnet sind, so dass das erste und das zweite veränderliche Magnetfeld gleichzeitig erzeugbar sind.

9. Elektromagnetischer Filter nach einem der Ansprüche 1 bis 8, dadurch gekennzeichnet, dass das Gehäuse (2) einen in Strömungsrichtung des Fluids zunehmenden Durchlassquerschnitt aufweist, so dass sich die Strömungsgeschwindigkeit des Fluids verringert.

10. Elektromagnetischer Filter nach einem der Ansprüche 1 bis 9, dadurch gekennzeichnet, dass er ausserdem eine am Boden des Gehäuses (2) ausmündende Abzugsleitung (10) aufweist.

11. Elektromagnetischer Filter nach einem der Ansprüche 9 und 10, dadurch gekennzeichnet, dass die Abzugsleitung (10) mit einem Absperrelement (12) zum periodischen Abziehen der Feststoffteilchen versehen ist.

12. Elektromagnetischer Filter nach den Ansprüchen 5 und 11, dadurch gekennzeichnet, dass der die Spulen des in der Strömungsrichtung des Fluids letzten Elektromagnets (8c) durchfliessende Strom in Wirkbeziehung zur Betätigung des Abzugs-Absperrelements steht.

13. Elektromagnetischer Filter nach einem der Ansprüche 10 und 11, dadurch gekennzeichnet, dass die Abzugsleitung (10) mit einer Absaugeinrichtung versehen ist.

14. Elektromagnetischer Filter nach einem der Ansprüche 1 bis 13, dadurch gekennzeichnet, dass er eine am Boden des Gehäuses (2) angeordnete Kratzeinrichtung (16) aufweist.

15. Elektromagnetischer Filter nach einem der Ansprüche 1 bis 14, dadurch gekennzeichnet, dass er eine Anordnung von Absperreinrichtungen und absperrbaren Spülwasserzuleitungen für die periodische Reinigung aufweist.

16. Elektromagnetischer Filter nach einem der Ansprüche 1 bis 15, dadurch gekennzeichnet, dass das Gehäuse (2) aus einem nicht magnetisierbaren Werkstoff ist.

17. Elektromagnetischer Filter nach einem der Ansprüche 1 bis 16, dadurch gekennzeichnet, dass der Innenraum des Gehäuses (2) wenigstens teilweise mit einer magnetisierbaren Auskleidung versehen ist.

FIG. 1

FIG. 4

FIG. 2

FIG. 3